# EUROPÄISCHE PATENTANMELDUNG

(11) **EP 1 416 705 A1**
(43) Veröffentlichungstag der Anmeldung: **06.05.2004**
(21) Anmeldenummer: 02450290.8
(22) Anmeldetag: 23.12.2002
(51) Int. Cl.: H04M 11/04, H04Q 7/22

(54) **Verfahren zum Übertragen von beim Eintreten eines zu überwachenden Ereignisses erzeugten Informationen**

(30) Priorität: 28.10.2002 AT 7212002 U
(71) Anmelder: IGM Schweisstechnik GmbH, 2355 Wiener Neudorf (AT)
(72) Erfinder: Auer, Otto, 2620 Neunkirchen (AT); Stremitzer, Andreas, 1238 Wien (AT)
(74) Vertreter: Hehenberger, Reinhard, Dipl.-Ing., Patentanwalt

(57) **Zusammenfassung**

Bei einem Verfahren zum Übertragen von Informationen, die beim Eintreten eines zu überwachenden Ereignisses erzeugt werden, wird der Information wenigstens eine voreingestellte Teilnehmernummer einer Kommunikationsverbindung zugeordnet und die Information dann über die Kommunikationsverbindung an den Teilnehmer mit der Teilnehmernummer gesandt. Wenn der oder die Teilnehmer nicht innerhalb einer vorgegebenen Zeitspanne eine positive Antwort geben, wird der Information wenigstens eine weitere voreingestellte Teilnehmernummer einer Kommunikationsverbindung zugeordnet und die Information über die Kommunikationsverbindung an den Teilnehmer mit dieser Teilnehmernummer gesandt.

Es können der Information gleich mehrere voreingestellte Teilnehmernummern einer Kommunikationsverbindung zugeordnet werden, worauf die Information über die Kommunikationsverbindung im wesentlichen gleichzeitig oder in kurzen Zeitabständen an die Teilnehmer mit den Teilnehmernummern gesandt wird.

## Beschreibung

Die Erfindung betrifft ein Verfahren zum Übertragen von Informationen, die beim Eintreten eines zu überwachenden Ereignisses erzeugt werden.

Es gibt viele Anwendungsfälle, in denen eine interessierte oder zuständige Person über bestimmte Ereignisse, z.B. Störfälle, informiert werden möchte, auch wenn die Person sich nicht am oder in der Nähe des Ortes befindet, an dem dieses Ereignis auftritt. Derartige Ereignisse können beispielsweise eine Betriebsstörung einer Maschine oder einer Anlage sein, aber auch im privaten Bereich auftreten, wenn z.B. in ein Haus eingebrochen und eine Alarmanlage aktiviert wird oder der Kühlschrank ausfällt. In diesen Fällen ist es meist sehr wichtig, daß rasch etwas unternommen wird, um den Schaden zu beheben oder (weiteren) Schaden zu verhindern.

Gemäß der Erfindung wird zur Lösung dieser Aufgabe vorgeschlagen, daß bei einem gattungsgemäßen Verfahren der Information wenigstens eine voreingestellte Teilnehmernummer einer Telekommunikationsverbindung zugeordnet wird und daß die Information über die Telekommunikationsverbindung an den Teilnehmer mit der Teilnehmernummer gesandt wird. Da der Teilnehmer als für den Störfall zuständige Person unmittelbar nach dem Eintreten des Ereignisses informiert wird, kann diese Person sofort die nötigen Maßnahmen ergreifen, die ihr zur Lösung des aktuellen Problems geeignet erscheinen. Das erfindungsgemäße Verfahren kann aber nicht nur verwendet werden, um jemanden bei Eintritt eines Ereignisses, zB. eines Problemes oder Schadens zu informieren, sondern auch dazu, den aktuellen Status, z.B. eines Sicherheitssystems oder eines industriellen Prozesses, zu ermitteln.

Da es vorkommen kann, daß die Person, bzw. der Teilnehmer, an den die Information ursprünglich gesandt wurde, nicht erreichbar ist, kann gemäß der Erfindung vorgesehen sein, daß die Information, wenn der Teilnehmer nicht innerhalb einer vorgegebenen Zeitspanne eine positive Antwort gibt, der Information wenigstens eine weitere voreingestellte Teilnehmernummer einer Kommunikationsverbindung zugeordnet wird und daß die Information über die Kommunikationsverbindung an den Teilnehmer mit dieser Teilnehmernummer gesandt wird.

Gemäß dieser Ausführungsform der Erfindung wird überwacht, ob der Teilnehmer innerhalb der vorgegebenen Zeitspanne eine positive Antwort gibt, d.h. eine Antwort zurücksendet, daß er die Information erhalten hat und allenfalls nötige Schritte einleiten wird. Falls dies nicht passiert, wird die Information an einen zweiten Teilnehmer gesandt. Diese zweite Person kann z.B. bei einem Betrieb eine in der Hierarchie gleichgestellte oder auch höhergestellte Person sein. Falls auch dieser Teilnehmer keine positive Antwort gibt, besteht die Möglichkeit, die Information noch an eine weitere Person zu senden und dies so lange zu wiederholen, bis entweder keine weiteren Teilnehmer mehr vorgesehen bzw. gespeichert sind oder eine positive Antwort erhalten wird.

Anstatt zu warten, ob der erste Teilnehmer innerhalb der vorgegebenen Zeitspanne antwortet, ist es in einer weiteren bevorzugten Ausführungsform der Erfindung auch möglich, daß der Information mehrere voreingestellte Teilnehmernummern einer Kommunikationsverbindung zugeordnet werden und daß die Information über die Kommunikationsverbindung im wesentlichen gleichzeitig oder in kurzen Zeitabständen an die Teilnehmer mit den Teilnehmernummern gesandt wird.

Bei dieser Ausführungsform wird die Information sofort an mehrere vorbestimmte Teilnehmer gesandt, so daß die Wahrscheinlichkeit, daß sofort eine zuständige Person auch tatsächlich erreicht wird, wesentlich höher ist.

Auch bei dieser Ausführungsform der Erfindung ist es natürlich möglich, daß keiner der informierten Teilnehmer erreichbar ist oder reagiert. In Weiterbildung der Erfindung kann daher vorgesehen sein, daß die Information, wenn keiner der Teilnehmer innerhalb einer vorgegebenen Zeitspanne eine positive Antwort gibt, der Information wenigstens eine weitere voreingestellte Teilnehmernummer einer Kommunikationsverbindung zugeordnet wird und daß die Information über die Kommunikationsverbindung an den Teilnehmer mit dieser Teilnehmernummer gesandt wird.

Bei dieser Ausführungsform wird wiederum eine vorgegebene Zeitspanne gewartet, ob einer der Teilnehmer eine positive Antwort gibt, d.h. den Erhalt der Information bestätigt und dadurch auch bestätigt sich um das Problem zu kümmern. Gleichermaßen ist es möglich, die Information gleich an mehrere vordefinierte Teilnehmer zu senden, um die Wahrscheinlichkeit für eine positive Antwort zu erhöhen. Der oder die weiteren Teilnehmer, an welche die Information gesandt wird, können sich in der Betriebshierarchie wiederum auf der gleichen Ebene wie die zuerst kontaktierten Teilnehmer befinden oder in einer höheren. Falls auch die weiteren kontaktierten Teilnehmer nicht innerhalb der vorgegebenen Zeitspanne reagieren, d.h. eine positive Antwort an das sie informierende System zurücksenden, kann in weiterer Folge nochmals ein oder mehrere Teilnehmer in einem nächsten Schritt informiert werden, was sooft wiederholt werden kann, bis entweder keine Teilnehmer bzw. Teilnehmernummern mehr gespeichert sind, die informiert werden können, oder irgendeiner der informierten Teilnehmer eine positive Antwort gibt.

Wenn mehr als ein Teilnehmer kontaktiert wurde, kann in einer bevorzugten Ausführungsform der Erfindung vorgesehen sein, daß nach Erhalt einer positiven Antwort von einem Teilnehmer eine entsprechende Mitteilung an alle anderen Teilnehmer gesandt wird. Dies hat den Vorteil, daß die übrigen Teilnehmer eine positive Bestätigung erhalten, daß sich bereits jemand um das Problem kümmert und somit eine Reaktion ihrerseits nicht mehr erforderlich ist.

Die Information, welche der oder die Teilnehmer erhalten, kann sehr einfach aufgebaut sein und z.B. eine dem Ereignis entsprechende Zahl oder Buchstaben-Zahlenkombination sein. Wenn z.B. fünf Maschinen überwacht werden, kann der Teilnehmer eine Zahl zwischen 1 und 5 erhalten, was z.B. heißt, daß die Maschine mit der jeweiligen Zahl eine Betriebsstörung hat. Bei umfangreicheren oder komplexeren Überwachungsaufgaben kann es aber für den Teilnehmer schwierig werden, anhand der Zahl oder des Codes, den er erhält, sofort zweifelsfrei zu wissen, um welches Ereignis es sich handelt. In einer bevorzugten Ausführungsform der Erfindung wird daher die Information vor ihrer Sendung in eine Ereignismeldung umgewandelt, d.h., daß das System, mit dem das erfindungsgemäße Verfahren ausgeführt wird, einen Datenspeicher aufweist, in dem das Signal oder die Information, die von der zu überwachenden Einheit erhalten wird, in eine unmittelbar verständliche Meldung umgewandelt wird, welche an die Teilnehmer versandt wird, z.B. "Maschine 1-Stromausfall" oder "Anlage 5-Betriebsstörung".

Als Kommunikationsverbindung kann jede geeignete Verbindung gewählt werden, über welche die entsprechenden Daten übertragen werden können. Insbesondere bieten sich allerdings GSM, Bluetooth, Infrarot und wirless LAN-Verbindungen an. Bevorzugt werden die Informationen über SMS oder MMS oder als Tonaufnahme bzw. Sprachmitteilung, gegebenenfalls auch online (z.B. Babyphon) übertragen.

Mit dem erfindungsgemäßen Verfahren können nicht nur Betriebsstörungen, Schadensfälle, Einbrüche od.dgl. überwacht werden, sondern auch Ereignisse wie das Erreichen eines bestimmten Zählerstandes, eines Speicherinhaltes, od.dgl. Dabei ist es im Rahmen der Erfindung von Vorteil, wenn derartige Informationen nicht nur beim Eintreten eines bestimmten Ereignisses automatisch übermittelt werden, sondern wenn es einem Teilnehmer auch möglich ist, eine aktive Anfrage betreffend einen bestimmten Betriebszustand, wie eben z.B. einen Zählerstand oder Speicherinhalt, bei Bedarf abzufragen, so daß es im Rahmen der vorliegenden Erfindung bevorzugt ist, daß die Informationen über ein zu überwachendes Ereignis auf aktive Anfrage an die Teilnehmernummer des anfragenden Teilnehmers gesandt wird.

Weitere Merkmale und Vorteile der vorliegenden Erfindung ergeben sich aus der nachfolgenden Beschreibung von bevorzugten Ausführungsformen der Erfindung mit Bezugnahme auf die Zeichnungen.

Es zeigt: Fig. 1 ein erstes Ausführungsbeispiel des erfindungsgemäßen Verfahrens, bei welchem das Eintreten eines Ereignisses an zwei Teilnehmer gemeldet wird, Fig. 2 eine Ausführungsform, bei der das Eintreten eines Ereignisses an weitere Teilnehmer gesandt wird, wenn von den ersten Teilnehmern keine positive Antwort kommt, und die Fig. 3 und 4 aktive Anfragen durch Teilnehmer an das System darstellen.

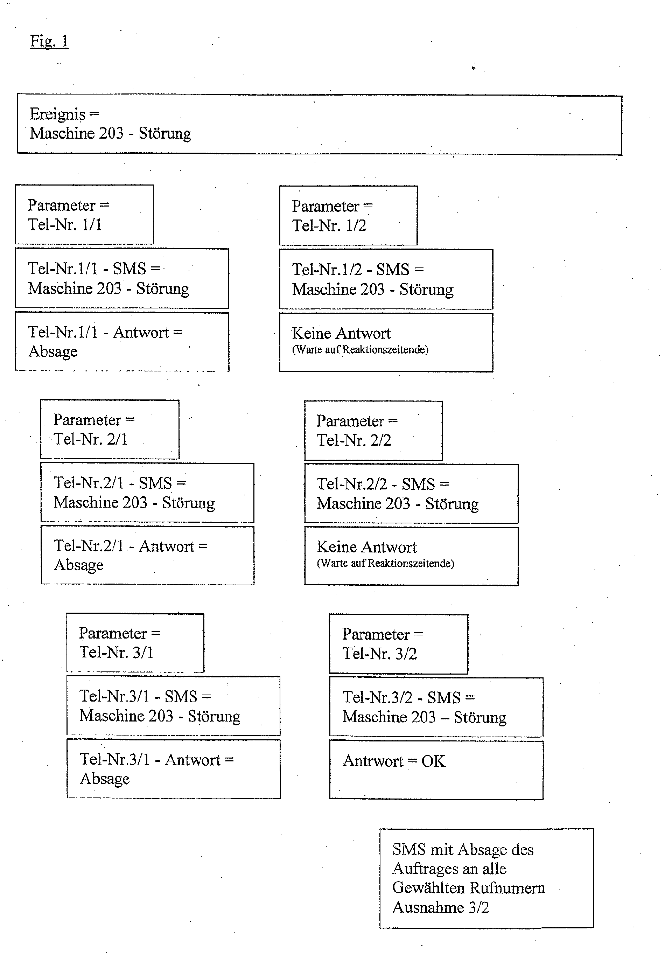

Bei der Ausführungsform gemäß Fig. 1 wird als Ereignis beispielsweise der Zustand einer Türe in einem Raum Nr. 303 überwacht. Wenn die Tür offen steht, schickt ein Türmelder ein Signal an das System, mit dem das erfindungsgemäße Verfahren ausgeführt wird. Da dieses Signal für den zu informierenden Teilnehmer in der Regel nicht unmittelbar lesbar bzw. verständlich ist, wird dieses Signal zunächst in eine Ereignismeldung umgewandelt, die z.B. lautet "Raum 303-Tür offen".

Im nächsten Schritt wird abgefragt, wem das Eintreten dieses Ereignisses mitgeteilt werden soll. Dazu kann eine interne Tabelle vorgesehen sein, in der eine oder mehrere Telefonnummern gespeichert sind. Es ist möglich, für alle zu überwachenden Ereignisse die gleichen Telefonnummern vorzusehen oder für jedes Ereignis eine oder mehrere unterschiedliche Telefonnummern. Beispielsweise können für Ereignisse, welche die allgemeine Sicherheit betreffen, z.B. nicht verschlossene Türen, andere Telefonnummern gespeichert sein, als für betriebstechnische Angelegenheiten, z.B. die Störung einer Maschine.

Im in Fig. 1 dargestellten Beispiel sind für das Ereignis "Raum 303-Türe offen" zwei Telefonnummern vorgesehen, die diesem Ereignis zugeordnet werden. Im letzten Schritt wird dann eine SMS mit dem Inhalt "Raum 303-Türe offen" an die Teilnehmer mit den jeweiligen Telefonnummern versandt.

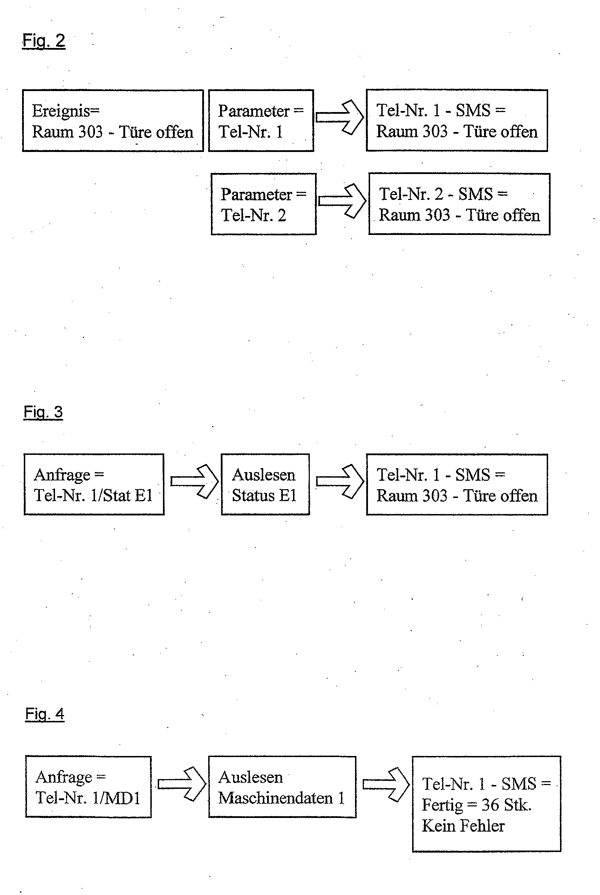

Da es natürlich möglich ist, daß die beiden Teilnehmer nicht erreichbar sind oder auf die das Ereignis betreffende Meldung nicht reagieren, ist gemäß dem in Fig. 2 dargestellten Verfahrensbeispiel anhand des Ereignisses "Maschine 203-Störung" dargestellt, daß bei Nichterhalt einer positiven Antwort entsprechende Meldungen an weitere Teilnehmer gesandt werden.

Dies erfolgt wiederum so, daß das von der Maschine 203 kommende Störsignal zunächst wieder in eine Ereignismeldung mit dem Inhalt "Maschine 203-Störung" umgewandelt wird.

Die Störung wird wie im Beispiel gemäß Fig. 1 wiederum zwei Teilnehmern zugeordnet und die Ereignismeldung an die Teilnehmer mit diesen beiden Teilnehmernummern gesandt.

Gleichzeitig mit der Absendung der Ereignismeldung beginnt eine Uhr mit einer voreingestellten Zeit zu laufen. Im vorliegenden Fall gibt der Teilnehmer mit der Tel-Nr. 1/1 zwar rechtzeitig eine Antwort, aber diese ist negativ, weil der Teilnehmer aus irgendeinem Grund daran gehindert ist, sich um die Störung zu kümmern. Der Teilnehmer mit der Tel-Nr. 1/2 gibt innerhalb der vorgegebenen Zeit überhaupt keine Antwort, da er z.B. nicht erreichbar ist.

Da bei Ablauf der vorgegebenen Zeit keine positive Antwort eingelangt ist, werden der Ereignismeldung in einer zweiten Stufe zwei weitere Tel-Nrn. 2/1 und 2/2 zugeordnet und die Störungsmeldung an diese Teilnehmer gesandt. Auch in diesem Fall wird angenommen, daß der Teilnehmer mit der Tel-Nr. 2/1 absagt, d.h. negativ antwortet, und der Teilnehmer mit der Tel-Nr. 2/2 überhaupt nicht antwortet.

Es wird daher in einem dritten Versuch das Ereignis an zwei weitere Teilnehmer mit den Tel-Nrn. 3/1 und 3/2 gesandt, wobei vom Teilnehmer mit der Tel-Nr. 3/1 wieder eine negative Antwort kommt. Der Teilnehmer mit der Tel-Nr. 3/2 schließlich gibt innerhalb der voreingestellten Zeit eine positive Antwort, wodurch das Verfahren, soferne noch weitere Teilnehmer vorhanden wären, die kontakt hätten werden können, angehalten wird.

Es folgt abschließend noch eine Meldung, ebenfalls in Form einer Mitteilung, z.B. einer Sprachmitteilung oder SMS, mit einer Absage des Auftrages an alle Teilnehmer mit Ausnahme jenes Teilnehmers, der eine positive Antwort gegeben hat.

Die Teilnehmer in den drei aufeinanderfolgenden Stufen können z.B. innerhalb einer Betriebshierarchie auf der gleichen Ebene, aber auch auf unterschiedlichen Ebenen derart sein, daß die Hierarchie bei jedem neuen Versuch höher wird. Es ist z.B. aber auch möglich, daß die Hierarchie in den beiden ersten Versuchen gleich ist und nur im dritten Versuch eine höhere Hierarchie kontaktiert wird.

Obwohl das erfindungsgemäße Verfahren in erster Linie darauf abgestellt ist, daß beim Eintreten eines oder mehrerer bestimmter Ereignisse automatisch eine entsprechende Information von bestimmten Personen oder Teilnehmern erfolgt, kann der Status für bestimmte Ereignisse auch willkürlich von Teilnehmern abgefragt werden.

Im Beispiel gemäß Fig. 3 schickt eine Person bzw. ein Teilnehmer eine Anfrage an das System betreffend den Status der Türe vom Raum 303. Die Anfrage enthält die Telefonnummer der anfragenden Person (Tel-Nr. 1), kombiniert mit einer Anfrage betreffend den Status für das Ereignis 1, d.h. den Status der Türe ("Statt. E1").

Vom System wird anschließend der Status der Türe ausgelesen ('"Auslesen-Status E1") und in einem letzten Schritt wird der Status für das Ereignis 1 ("Raum 303-Türe offen") in Form einer SMS an die Telefonnummer der anfragenden Person zurückgesandt.

Im Beispiel gemäß Fig. 4 schließlich wird nach der gleichen Systematik wie gemäß Fig. 3 eine Anfrage betreffend das Ereignis "Maschinendaten 1" gestartet, worauf die Maschinendaten 1 ausgelesen und in Form einer SMS: "fertig = 36 Stk. kein Fehler" an den anfragenden Teilnehmer zurückgesandt wird.

In Verbindung mit dem erfindungsgemäßen Verfahren können auch weitere Anwendungen ausgeführt werden, die beispielsweise einen aktiven Eingriff in die Steuerung, den Ablauf oder den Zustand von Maschinenanlagen oder sonstigen Elementen, wie z.B. Türen, eingreifen. So können z.B. Anlagen oder Anlagenkomponenten in oder außer Betrieb gesetzt werden oder Beleuchtungen, Garagentore, Heizungen, oder Sonnenschutzeinrichtungen betätigt werden, wobei dies entweder als Reaktion auf ein mit dem erfindungsgemäßen Verfahren gemeldetes Ereignis oder willkürlich, z.B. auf Grund von bei Bedarf über das erfindungsgemäße Verfahren abgerufene Daten oder Informationen, erfolgen kann.

Die Daten oder Informationen, die auf Grund einer aktiven Anfrage erhalten werden, können dabei den Ereignissen entsprechen, die auch für eine automatische Mitteilung des Eintretens des Ereignisses vorgesehen sind, können sich von diesen aber auch unterscheiden. So können z.B. sicherheitsrelevante Ereignisse oder Betriebsstörungen mit dem erfindungsgemäßen Verfahren automatisch an ausgewählte Teilnehmer gemeldet werden, wogegen z.B. Informationen über Stückzahlen, Betriebstemperaturen od.dgl. nur auf aktive Anfrage mitgeteilt werden.

Zusammenfassend kann ein Ausführungsbeispiel der Erfindung wie folgt dargestellt werden:

Bei einem Verfahren zum Übertragen von Informationen, die beim Eintreten eines zu überwachenden Ereignisses erzeugt werden, wird der Information wenigstens eine voreingestellte Teilnehmernummer einer Kommunikationsverbindung zugeordnet und die Information dann über die Kommunikationsverbindung an den Teilnehmer mit der Teilnehmernummer gesandt. Wenn der oder die Teilnehmer nicht innerhalb einer vorgegebenen Zeitspanne eine positive Antwort geben, wird der Information wenigstens eine weitere voreingestellte Teilnehmernummer einer Kommunikationsverbindung zugeordnet und die Information über die Kommunikationsverbindung an den Teilnehmer mit dieser Teilnehmernummer gesandt.

Es können der Information gleich mehrere voreingestellte Teilnehmernummern einer Kommunikationsverbindung zugeordnet werden, worauf die Information über die Kommunikationsverbindung im wesentlichen gleichzeitig oder in kurzen Zeitabständen an die Teilnehmer mit den Teilnehmernummern gesandt wird.

## Patentansprüche

1. Verfahren zum Übertragen von Informationen, die beim Eintreten eines zu überwachenden Ereignisses erzeugt werden, **dadurch gekennzeichnet, daß** der Information wenigstens eine voreingestellte Teilnehmernummer einer Kommunikationsverbindung zugeordnet wird und daß die Information über die Kommunikationsverbindung an den Teilnehmer mit der Teilnehmernummer gesandt wird.

2. Verfahren nach Anspruch 1, **dadurch gekennzeichnet, daß** die Information, wenn der Teilnehmer nicht innerhalb einer vorgegebenen Zeitspanne eine positive Antwort gibt, der Information wenigstens eine weitere voreingestellte Teilnehmernummer einer Kommunikationsverbindung zugeordnet wird und daß die Information über die Kommunikationsverbindung an den Teilnehmer mit dieser Teilnehmernummer gesandt wird.

3. Verfahren nach Anspruch 1, **dadurch gekennzeichnet, daß** der Information mehrere voreingestellte Teilnehmernummern einer Kommunikationsverbindung zugeordnet werden und daß die Information über die Kommunikationsverbindung im wesentlichen gleichzeitig oder in kurzen Zeitabständen an die Teilnehmer mit den Teilnehmernummern gesandt wird.

4. Verfahren nach Anspruch 3, **dadurch gekennzeichnet, daß** die Information, wenn keiner der Teilnehmer innerhalb einer vorgegebenen Zeitspanne eine positive Antwort gibt, der Information wenigstens eine weitere voreingestellte Teilnehmernummer einer Kommunikationsverbindung zugeordnet wird und daß die Information über die Kommunikationsverbindung an den Teilnehmer mit dieser Teilnehmernummer gesandt wird.

5. Verfahren nach Anspruch 3, **dadurch gekennzeichnet, daß**, wenn keiner der Teilnehmer innerhalb einer vorgegebenen Zeitspanne eine positive Antwort gibt, der Information mehrere weitere voreingestellte Teilnehmernummern einer Kommunikationsverbindung zugeordnet werden und daß die Information über die Kommunikationsverbindung im wesentlichen gleichzeitig oder in kurzen Zeitabständen an die Teilnehmer mit den Teilnehmernummern gesandt wird.

6. Verfahren nach einem der Ansprüche 2 bis 5, **dadurch gekennzeichnet, daß** nach Erhalt einer positiven Antwort von einem Teilnehmer eine entsprechende Mitteilung an alle anderen Teilnehmer gesandt wird.

7. Verfahren nach einem der Ansprüche 1 bis 6, **dadurch gekennzeichnet, daß** die Information vor ihrer Sendung in eine Ereignismeldung umgewandelt wird.

8. Verfahren nach einem der Ansprüche 1 bis 7, **dadurch gekennzeichnet, daß** die Information in Form von GPRS, SMS, MMS oder Sprachmitteilung zugesandt wird.

9. Verfahren nach einem der Ansprüche 1 bis 8, **dadurch gekennzeichnet, daß** die Kommunikationsverbindung ein Telekommunikationsnetz, insbesondere ein GSM-Netz, ist.

10. Verfahren nach einem der Ansprüche 1 bis 9, **dadurch gekennzeichnet, daß** die Informationen über ein zu überwachendes Ereignis auf aktive Anfrage an die Teilnehmernummer des anfragenden Teilnehmers gesandt wird.
